# EUROPEAN PATENT SPECIFICATION

(11) **EP 2 628 616 B1**
(45) Date of publication and mention of the grant of the patent: **29.08.2018**
(21) Application number: 11832433.4
(22) Date of filing: 03.10.2011
(51) Int. Cl.: B60H 1/00

(54) **VEHICLE AIR CONDITIONING DEVICE**
KLIMAANLAGEVORRICHTUNG FÜR FAHRZEUG
DISPOSITIF DE CONDITIONNEMENT D'AIR POUR VÉHICULE

(30) Priority: 14.10.2010 JP 2010231141
(43) Date of publication of application: 21.08.2013
(73) Proprietor: Sanden Holdings Corporation, Gunma 372-8502 (JP)
(72) Inventor: SAITOU Masakazu, Isesaki-shi Gunma 372-8502 (JP)
(74) Representative: Gill Jennings & Every LLP
(86) International application number: PCT/JP2011/072747
(87) International publication number: WO 2012/049997

(56) References cited:
- DE-A1- 19 847 158
- JP-A- 10 100 643
- JP-A- 10 230 734
- JP-A- 2000 238 526
- JP-A- 2001 206 044
- JP-A- 2003 072 344
- US-A- 6 092 592
- US-A1- 2010 043 470

## Description

### Technical Field

The present invention relates to a vehicle air conditioning device that performs cooling and heating inside the cabin of an automobile.

### Background Art

A conventional vehicle air conditioning device of this kind is known that includes a blower unit that sucks in outside air (air outside the vehicle cabin) and inside air (air inside the vehicle cabin), and an air conditioning unit that cools or heats air that is sent from the blower unit and blows out the cooled or heated air into the cabin, in which the blower unit is disposed on one side of the air conditioning unit (for example, see Patent Literature 1).

The blower unit includes a blower fan that sucks in outside air, and a blower fan that sucks in inside air, and is configured to blow each of the outside air and the inside air to the air conditioning unit through a duct. In this case, an outside air ventilation flue and an inside air ventilation flue are provided in an upper part and a lower part of the duct of the blower unit, respectively, and a configuration is adopted so that the outside air and the inside air from the blower unit flow to the air conditioning unit from one side in the width direction of the vehicle towards the other side by means of the duct.

The air conditioning unit includes: an outside air ventilation flue through which outside air that is sucked in from outside a cabin of a vehicle flows; an inside air ventilation flue through which inside air that is sucked in from inside the cabin of the vehicle flows; an evaporator that is disposed on a downstream side of the outside air ventilation flue and the inside air ventilation flue; an outlet-side ventilation flue through which air that flows out from the evaporator flows; a heater that is disposed on a downstream side of the evaporator; a heater-side ventilation flue that causes air that flows out from the evaporator to flow to the outlet-side ventilation flue via the heater; and a damper that opens/closes a flow path of air that flows directly to the outlet-side ventilation flue from the evaporator and a flow path of air that flows to the outlet-side ventilation flue via the heater-side ventilation flue from the evaporator, respectively.

The above described damper is formed so as to span the evaporator in the width direction on the downstream side of the evaporator, and is configured so as to open/close a flow path on the downstream side of the evaporator by rotating around a shaft that extends in the width direction of the evaporator. In this case, because the outside air of the outside air ventilation flue flows out from an upper portion of the evaporator and the inside air of the inside air ventilation flue flows out from a lower portion of the evaporator, a damper that opens/closes the upper side of the evaporator and a damper that opens/closes the lower side of the evaporator are respectively provided on the downstream side of the evaporator, and the respective dampers are configured so as to open/close in synchrony so that the respective degrees of opening of the dampers are equal.

US2010/043470 describes a vehicle air conditioning device according to the preamble of claim 1.

### Citation List

### Patent Literature

Patent Literature 1: Japanese Patent No. 3309779

### Summary of Invention

### Technical Problem

However, in the above described vehicle air conditioning device, because a damper that opens/closes the downstream side of the evaporator is provided for each of the outside air and inside air flow sections, respectively, there is the problem that the number of dampers increases, which complicates the structure and leads to an increase in the manufacturing cost.

The present invention has been made in view of the above described problem, and an object of the present invention is to provide a vehicle air conditioning device in which the number of dampers that open/close a lower side of an evaporator can be reduced, even in a configuration that causes outside air and inside air to flow to an evaporator, respectively.

### Solution to Problem

To achieve the above described object, a vehicle air conditioning device according to the present invention includes: an outside air ventilation flue through which outside air that is sucked in from outside a cabin of the vehicle flows; an inside air ventilation flue through which inside air that is sucked in from inside the cabin of the vehicle flows; an evaporator that is disposed on a downstream side of the outside air ventilation flue and the inside air ventilation flue; an outlet-side ventilation flue through which air that flows out from the evaporator flows; a heater that is disposed on a downstream side of the evaporator; a heater-side ventilation flue that causes air that flows out from the evaporator to flow via the heater to the outlet-side ventilation flue; and a damper that is formed so as to span the evaporator in a width direction on the downstream side of the evaporator, and that, by rotating around a shaft extending in the width direction of the evaporator, opens/closes a flow path of air that flows directly to the outlet-side ventilation flue from the evaporator and a flow path of air that flows from the evaporator via the heater-side ventilation flue to the outlet-side ventilation flue, respectively; wherein the outside air ventilation flue is formed so that the outside air flows to a predetermined position in the width direction of the evaporator, the inside air ventilation flue is formed so that the inside air flows to another predetermined position in the width direction of the evaporator, the outside air ventilation flue is formed so that outside air flows to one end side and the other end side in the width direction of the evaporator; and the inside air ventilation flue is formed so that inside air flows to a central site in the width direction of the evaporator.

Thus, in a configuration in which a damper that opens/closes a downstream side of an evaporator is formed so as to span the evaporator in the width direction, and rotates around a shaft that extends in the width direction of the evaporator, because outside air flows to a predetermined position in the width direction of the evaporator and inside air flows to another predetermined position in the width direction of the evaporator, at any degree of opening of the damper, outside air from the outside air ventilation flue and inside air from the inside air ventilation flue each flow to the downstream side of the evaporator at a flow rate that corresponds to the degree of opening of the damper. Therefore, even in a configuration that causes outside air and inside air to each flow to an evaporator, it is not necessary to provide a damper that opens/closes the downstream side of the evaporator for each of the outside air and inside air flow sections, respectively.

### Advantageous Effects of Invention

According to the present invention, even in a configuration that causes outside air and inside air to flow to an evaporator, respectively, since it is not necessary to provide a damper that opens/closes the downstream side of the evaporator for each of the outside air and inside air flow sections, respectively, the number of dampers can be reduced, and thus the structure can be simplified and the manufacturing cost can be lowered.

### Brief Description of Drawings

Figure 1 is a schematic plan view of a vehicle air conditioning device that illustrates one embodiment of the present invention.
Figure 2 is a perspective view of a principal portion of the vehicle air conditioning device.
Figure 3 is a schematic planar cross-sectional view of an air conditioning unit.
Figure 4 is a schematic front view of the air conditioning unit.
Figure 5 is a side cross-sectional view of the air conditioning unit as viewed in the direction of an arrow line A-A in Figure 3.
Figure 6 is a side cross-sectional view of the air conditioning unit as viewed in the direction of an arrow line B-B in Figure 3.
Figure 7 is a side cross-sectional view of the air conditioning unit as viewed in the direction of an arrow line C-C in Figure 3.
Figure 8 is a schematic perspective view of outside air ventilation flues and an inside air ventilation flue.
Figure 9 is a schematic perspective view of the outside air ventilation flues and the inside air ventilation flue that illustrates a flow state of outside air and inside air.
Figure 10 is a side cross-sectional view of the air conditioning unit that illustrates a face mode.
Figure 11 is a side cross-sectional view of the air conditioning unit that illustrates a top/bottom temperature difference mode.
Figure 12 is a side cross-sectional view of the air conditioning unit that illustrates a foot mode.
Figure 13 is a side cross-sectional view of the air conditioning unit that illustrates a defroster mode.
Figure 14 is a side cross-sectional view of the air conditioning unit that illustrates a foot/defroster mode.
Figure 15 is a schematic planar cross-sectional view of an air conditioning unit that shows another embodiment of the present invention.
Figure 16 is a schematic front view of an air conditioning unit.

### Description of Embodiments

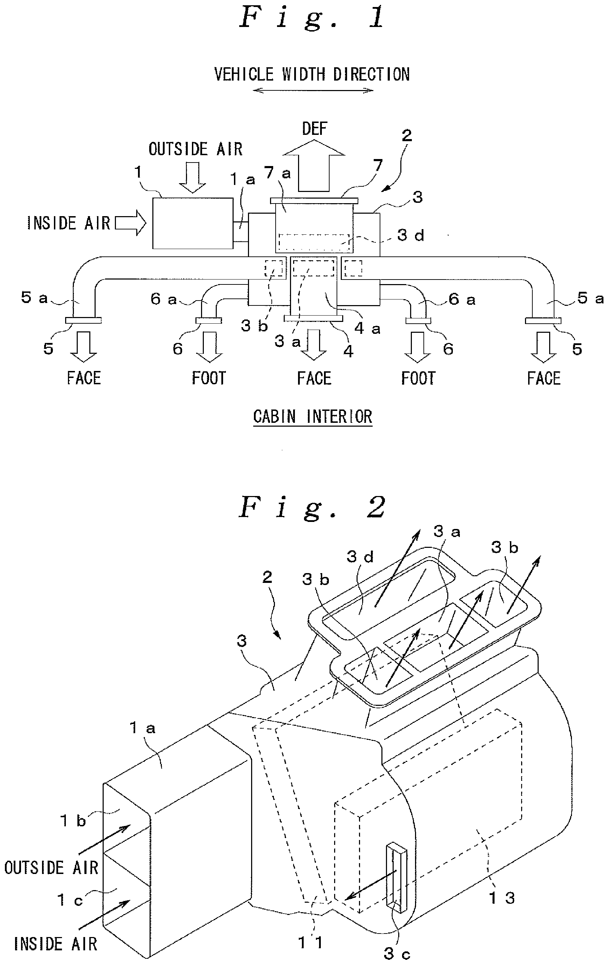

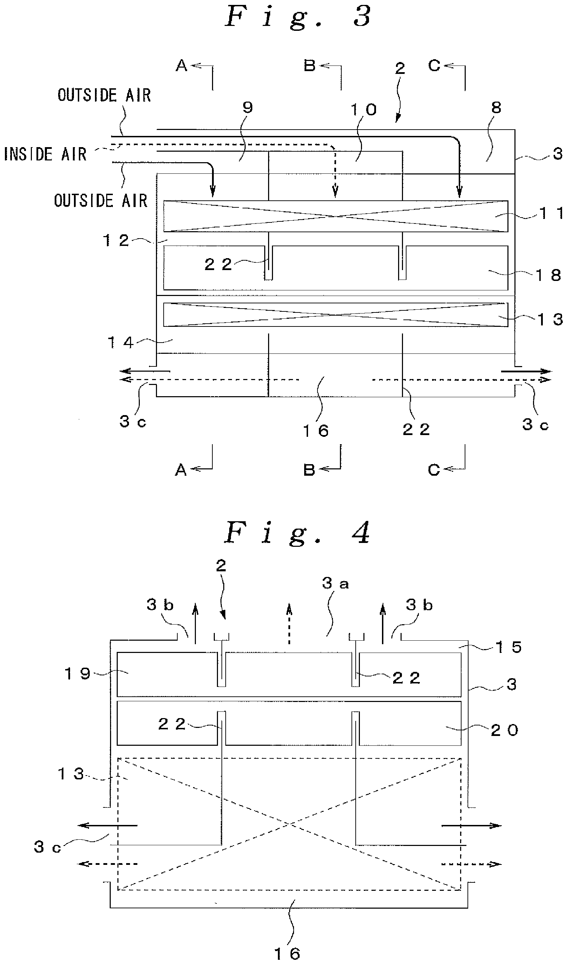

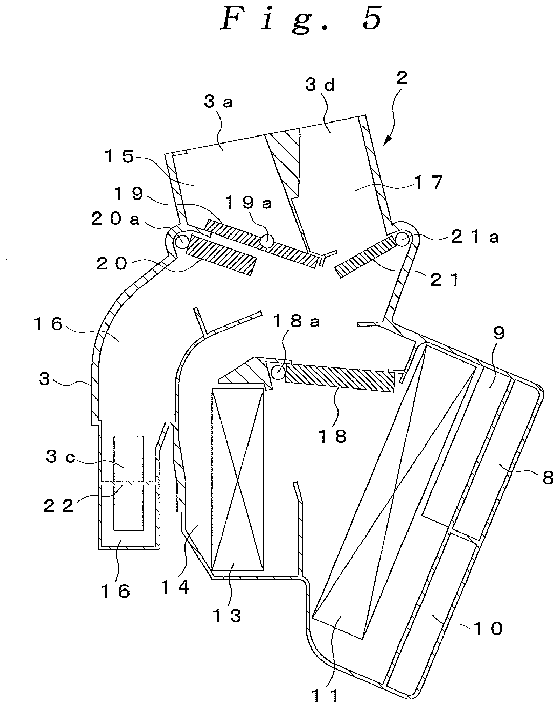

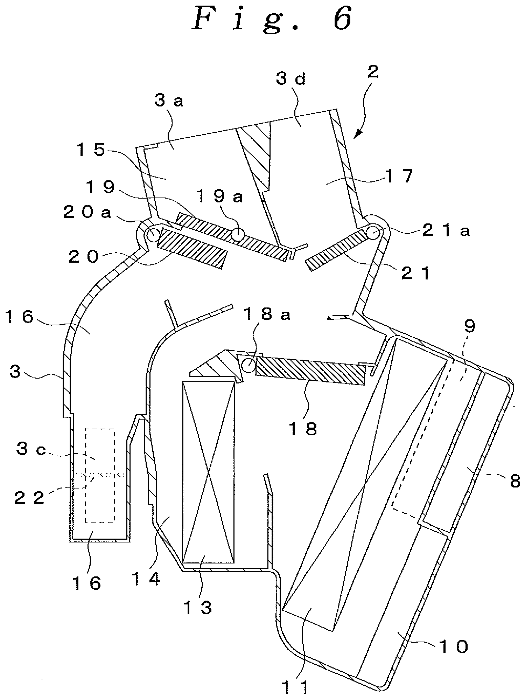

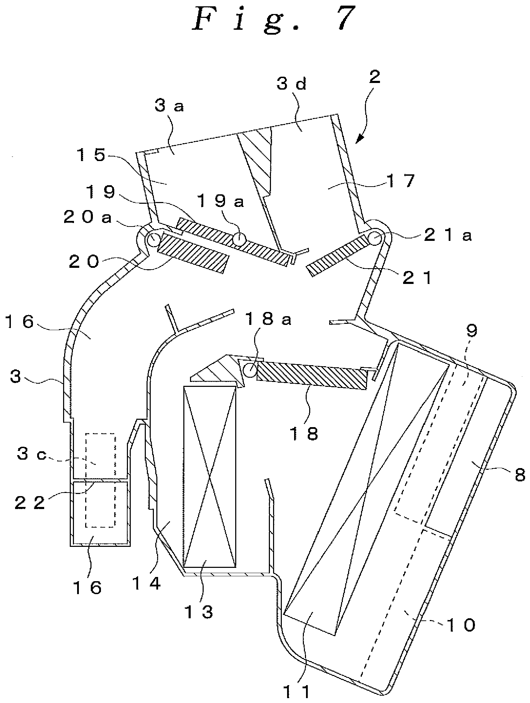

Figures 1 to 14 show an embodiment of the present invention.

A vehicle air conditioning device of the present embodiment includes a blower unit 1 that sucks in outside air (air outside the vehicle cabin) and inside air (air inside the vehicle cabin) and an air conditioning unit 2 that cools or heats air that is sent from the blower unit 1 and blows out the cooled or heated air into the cabin, in which the blower unit 1 is disposed on one side of the air conditioning unit 2.

Although not shown in the drawings, the blower unit 1 includes a blower fan that sucks in outside air and a blower fan that sucks in inside air, and is configured to blow the outside air and the inside air to the air conditioning unit 2 through a duct 1a, respectively. In this case, a single upper ventilation flue 1b through which outside air flows and a single lower ventilation flue 1c through which inside air flows are provided at an upper part and a lower part, respectively, of the duct 1a of the blower unit 1, and a configuration is adopted so that outside air and inside air from the blower unit 1 flow from one side towards the other side in the width direction of the vehicle to the air conditioning unit 2 by means of the duct 1a.

The air conditioning unit 2 includes a unit body 3 having a hollow shape that is formed so that air can flow through the inside thereof. The unit body 3 is connected to a first face air outlet 4, second face air outlets 5, foot air outlets 6 and a defroster air outlet 7 that open inside the cabin, through ducts 4a, 5a, 6a, and 7a, respectively. In this case, the first face air outlet 4 is provided at a central site in the width direction inside the cabin as a first air outlet, and is configured to blow out air mainly between the driver's seat and the front passenger seat. The second face air outlets 5 are provided on each side in the width direction inside the cabin as second air outlets, and are configured to blow out air mainly on the door glass side of the driver's seat and the front passenger seat. The foot air outlets 6 are respectively disposed at two places in the width direction inside the cabin, and are configured to blow out air mainly into foot space at the driver's seat and the front passenger seat. The defroster air outlet 7 is disposed at the central site in the width direction inside the cabin, and is configured to blow out air on the inner side of the windshield.

Inside the unit body 3 are provided: first and second outside air ventilation flues 8 and 9 through which outside air that is blown from the blower unit 1 flows; an inside air ventilation flue 10 through which inside air that is blown from the blower unit 1 flows; an evaporator 11 that is disposed on a downstream side of the respective outside air ventilation flues 8 and 9 and the inside air ventilation flue 10; an outlet-side ventilation flue 12 through which air that flows out from the evaporator 11 flows; a heater 13 that is disposed on a downstream side of the evaporator 11; a heater-side ventilation flue 14 that causes air that flows out from the evaporator 11 to flow to the outlet-side ventilation flue 12 via the heater 13; a face-side ventilation flue 15 through which air of the outlet-side ventilation flue 12 flows out to the side of the respective face air outlets 4 and 5; a foot-side ventilation flue 16 through which air of the outlet-side ventilation flue 12 flows out to the side of the respective foot air outlets 6; a defroster-side ventilation flue 17 through which air of the outlet-side ventilation flue 12 flows out to the side of the defroster air outlet 7; a first damper 18 that opens/closes a flow path of air that flows directly to the outlet-side ventilation flue 12 from the evaporator 11 and a flow path of air that flows from the evaporator 11 via the heater-side ventilation flue 14 to the outlet-side ventilation flue 12, respectively; a second damper 19 that regulates a flow amount of air that flows out from the outlet-side ventilation flue 12 to the face-side ventilation flue 15; a third damper 20 that regulates a flow amount of air that flows out from the outlet-side ventilation flue 12 to the foot-side ventilation flue 16; and a fourth damper 21 that regulates a flow amount of air that flows out from the outlet-side ventilation flue 12 to the defroster-side ventilation flue 17.

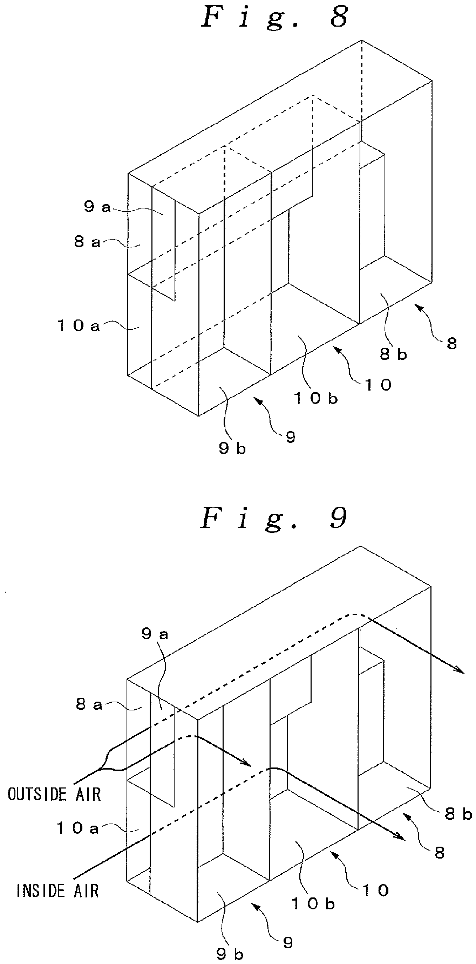

As shown in Figure 8, in the first outside air ventilation flue 8, an air inflow-side ventilation flue 8a is formed so as to extend in a width direction of the unit body 3 (width direction of the vehicle), and an air outflow-side ventilation flue 8b is open from the top to the bottom from one end side in the width direction of the unit body 3 towards the inner side of the unit body 3 (rear of the vehicle).

As shown in Figure 8, in the second outside air ventilation flue 9, an air inflow port 9a is disposed on the inner side of the unit body 3 relative to the first outside air ventilation flue 8, and an air outflow-side ventilation flue 9b is open from the top to the bottom from the other end side in the width direction of the unit body 3 towards the inner side of the unit body 3.

As shown in Figure 8, in the inside air ventilation flue 10, an air inflow-side ventilation flue 10a extends in the width direction of the unit body 3 (width direction of vehicle) and is disposed below the first outside air ventilation flue 8, and an air outflow-side ventilation flue 10b is open from the top to the bottom from a center end site (between the air outflow-side ventilation flues 8b and 9b) in the width direction of the unit body 3 towards the inner side of the unit body 3.

The respective outside air ventilation flues 8 and 9 and the inside air ventilation flue 10 are formed in a flattened shape so that a width thereof in the front-and-rear direction of the vehicle is less than a dimension thereof in the vertical direction, and the first outside air ventilation flue 8 and the second outside air ventilation flue 9 are provided so as to adjoin each other in the front-and-rear direction of the vehicle. Thus, the first and second outside air ventilation flues 8 and 9 of the unit body 3 communicate with the upper ventilation flue 1b of the duct 1a, and the inside air ventilation flue 10 of the unit body 3 communicates with the lower ventilation flue 1c of the duct 1a.

That is, outside air that is blown from the blower unit 1 flows out to one end side and the other end side in the width direction of the evaporator 11 from the first and second outside air ventilation flues 8 and 9, and inside air that is blown from the blower unit 1 flows out to the central site in the width direction of the evaporator 11 from the inside air ventilation flue 10.

In addition, the outlet-side ventilation flue 12, the heater-side ventilation flue 14, the face-side ventilation flue 15 and the foot-side ventilation flue 16 are partitioned in the width direction by partition walls 22 so as to correspond to the air outflow-side ventilation flue 8b of the first outside air ventilation flue 8, the air outflow-side ventilation flue 9b of the second outside air ventilation flue 9, and the air outflow-side ventilation flue 10b of the inside air ventilation flue 10, respectively. In this case, a ventilation flue at the central site in the width direction inside the face-side ventilation flue 15 communicates with a duct 4a of the first face air outlet 4 through a first opening portion 3a of the unit body 3, and ventilation flues on one end side and the other end side in the width direction inside the face-side ventilation flue 15 communicate with ducts 5a of the second face air outlets 5 on the left and right sides through second opening portions 3b of the unit body 3, respectively. Ventilation flues on one end side and the other end side in the width direction inside the foot-side ventilation flue 16 communicate with ducts 6a of the foot air outlets 6 on the left and right sides through third opening portions 3c of the unit body 3, respectively. A ventilation flue at the central site in the width direction inside the foot-side ventilation flue 16 branches to the left and right and communicates with the ducts 6a of the foot air outlets 6 on the left and right sides through the third opening portions 3c of the unit body 3. Further, the defroster-side ventilation flue 17 communicates with a duct 7a of the defroster air outlet 7 through a fourth opening portion 3d of the unit body 3.

The evaporator 11 is configured so that, by circulating low temperature refrigerant by means of a compressor of a refrigeration circuit that is not shown in the drawings, air that flows through the evaporator 11 is cooled by heat-exchange with the low temperature refrigerant.

The heater 13 is configured so that, by circulating cooling water of a radiator of the vehicle by means of an unshown pump, air that flows through the heater 13 is heated by heat-exchange with the cooling water.

The first damper 18 is formed so as to span the evaporator 11 in the width direction, and is rotatably supported by a spindle 18a that extends in the width direction of the evaporator 11. The first damper 18 is configured to be rotated by an unshown motor so as to open/close an air inflow side of the outlet-side ventilation flue 12 (downstream side of the evaporator 11) and an air inflow side of the heater-side ventilation flue 14 (downstream side of the evaporator 11), respectively. In this case, by rotating the first damper 18 to an arbitrary intermediate position, it is possible for air to flow at an arbitrary flow rate in both the outlet-side ventilation flue 12 and the heater-side ventilation flue 14, respectively.

The second damper 19 is rotatably supported by a spindle 19a, and is configured to be rotated by an unshown motor so as to open/close the face-side ventilation flue 15.

The third damper 20 is rotatably supported by a spindle 20a, and is configured to be rotated by an unshown motor so as to open/close the foot-side ventilation flue 16.

The fourth damper 21 is rotatably supported by a spindle 21a, and is configured to be rotated by an unshown motor so as to open/close the defroster-side ventilation flue 17.

In the air conditioning device configured as described above, air that is blown from the blower unit 1 is cooled or heated by the air conditioning unit 2 in accordance with an operation mode that is described later, and is blown out into the cabin from the air conditioning unit 2. Although air that is blown from the blower unit 1 to the air conditioning unit 2 flows from one side towards the other side in the width direction of the vehicle (width direction of the air conditioning unit 2), the flow direction thereof is changed to the front-and-rear direction of the vehicle by the respective outside air ventilation flues 8 and 9 and the inside air ventilation flue 10 of the air conditioning unit 2, and the air flows out towards the evaporator 11.

Further, although the first damper 18 that opens/closes the downstream side of the evaporator 11 is formed so as to span the evaporator 11 in the width direction and rotates around the spindle 18a that extends in the width direction of the evaporator 11, because the outside air of the first and second outside air ventilation flues 8 and 9 flows through one end side and the other end side in the width direction of the evaporator 11, respectively, and the inside air of the inside air ventilation flue 10 flows through the central site in the width direction of the evaporator 11, at any degree of opening of the first damper 18, the outside air from the respective outside air ventilation flues 8 and 9 and the inside air from the inside air ventilation flue 10 flow to the outlet-side ventilation flue 12 side or the heater-side ventilation flue 14 side at a flow rate that corresponds to the degree of opening of the first damper 18, respectively.

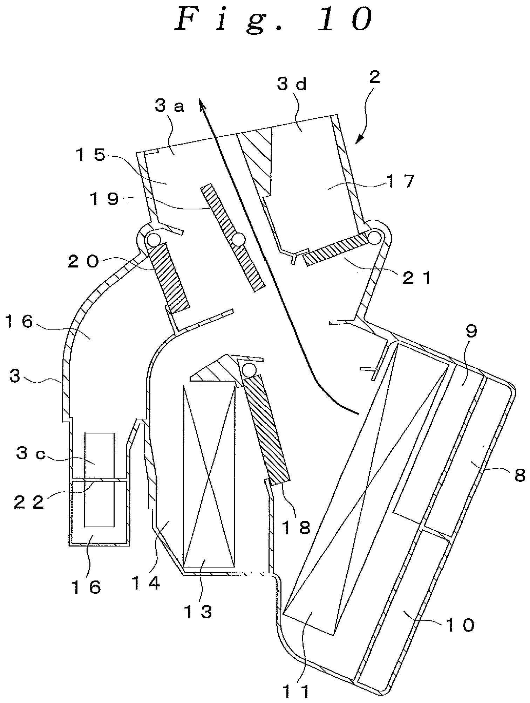

In a face mode, as shown in Figure 10, the outlet-side ventilation flue 12 is opened and the heater-side ventilation flue 14 is closed by the first damper 18, the face-side ventilation flue 15 is opened by the second damper 19, the foot-side ventilation flue 16 is closed by the third damper 20, and the defroster-side ventilation flue 17 is closed by the fourth damper 21. As a result, air that was cooled by the evaporator 11 flows to the face-side ventilation flue 15 from the outlet-side ventilation flue 12 and is blown out into the cabin from the first and second face air outlets 4 and 5.

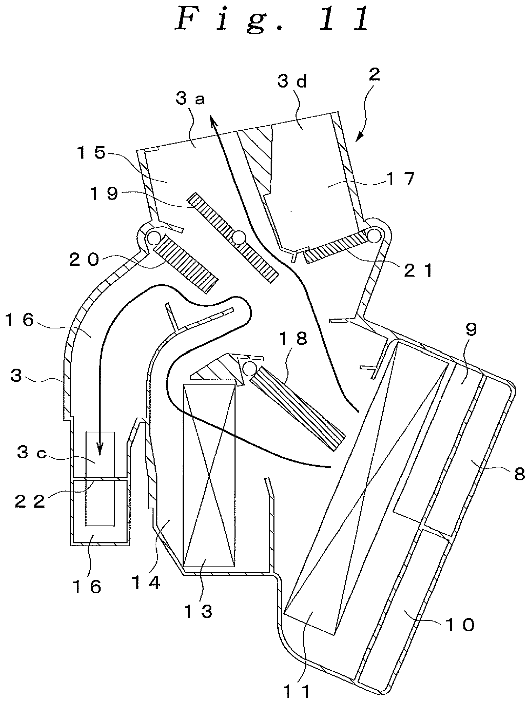

In a top/bottom temperature difference mode, as shown in Figure 11, the outlet-side ventilation flue 12 and the heater-side ventilation flue 14 are each opened by the first damper 18, the face-side ventilation flue 15 is opened by the second damper 19, the foot-side ventilation flue 16 is opened by the third damper 20, and the defroster-side ventilation flue 17 is closed by the fourth damper 21. As a result, some air that was cooled by the evaporator 11 flows to the face-side ventilation flue 15 from the outlet-side ventilation flue 12 and is blown out into the cabin from the first and second face air outlets 4 and 5. Further, the other air that was cooled by the evaporator 11 is heated by the heater 13 inside the heater-side ventilation flue 14, flows to the foot-side ventilation flue 16 from the outlet-side ventilation flue 12, and is blown out into foot space inside the cabin from the foot air outlets 6.

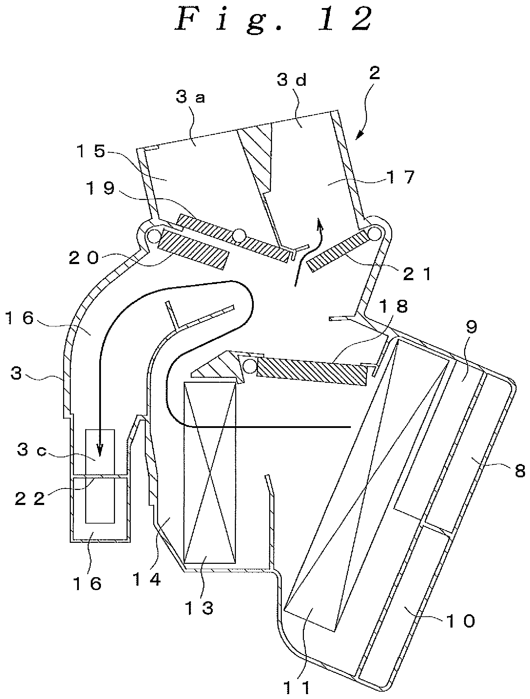

In a foot mode, as shown in Figure 12, the outlet-side ventilation flue 12 is closed and the heater-side ventilation flue 14 is opened by the first damper 18, the face-side ventilation flue 15 is closed by the second damper 19, the foot-side ventilation flue 16 is opened by the third damper 20, and the defroster-side ventilation flue 17 is closed by the fourth damper 21. As a result, air that flowed out from the evaporator 11 is heated by the heater 13 inside the heater-side ventilation flue 14, flows to the foot-side ventilation flue 16 from the outlet-side ventilation flue 12, and is blown out to the feet of an occupant from the foot air outlets 6. As a result, the cabin is mainly heated by air that is blown out into foot space. At this time, by opening the defroster-side ventilation flue 17 slightly by means of the fourth damper 21, a small quantity of the air in the outlet-side ventilation flue 12 flows to the defroster-side ventilation flue 17 and is blown out to the inner side of the windshield from the defroster air outlet 7. Thus, a windshield defogging effect can also be obtained by means of the small quantity of air that is blown out from the defroster air outlet 7.

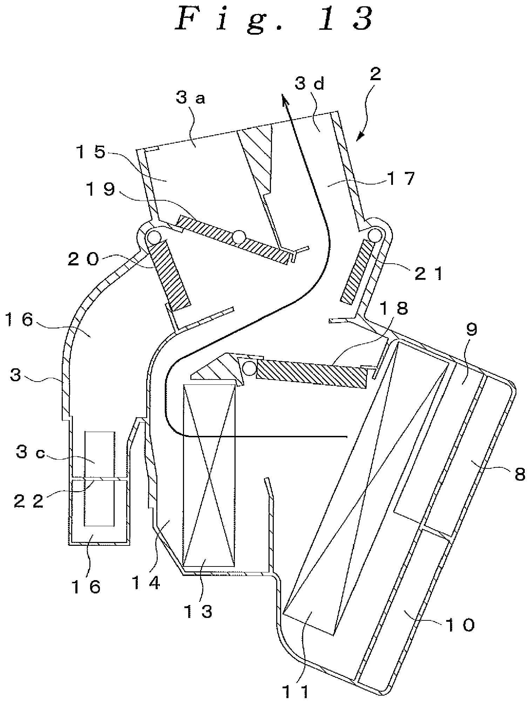

In a defroster mode, as shown in Figure 13, the outlet-side ventilation flue 12 is closed and the heater-side ventilation flue 14 is opened by the first damper 18, the face-side ventilation flue 15 is closed by the second damper 19, the foot-side ventilation flue 16 is closed by the third damper 20, and the defroster-side ventilation flue 17 is opened by the fourth damper 21. As a result, air that was cooled (dehumidified) by the evaporator 11 is heated by the heater 13 inside the heater-side ventilation flue 14, flows to the defroster-side ventilation flue 17 from the outlet-side ventilation flue 12, and is blown out towards the windshield from the defroster air outlet 7.

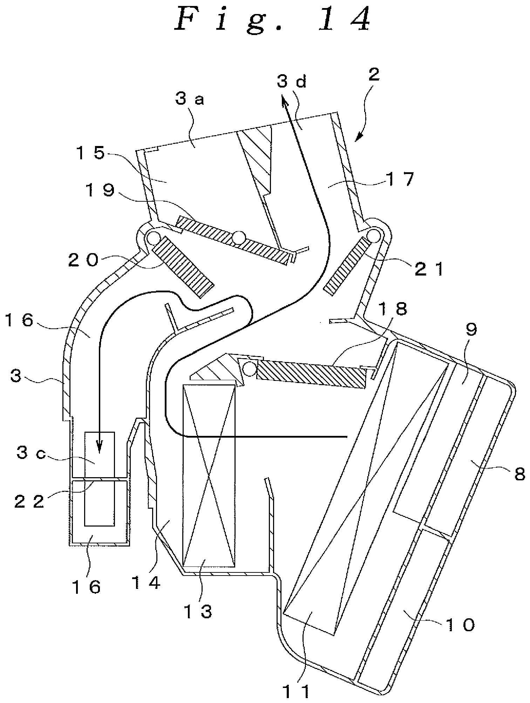

In a foot/defroster mode, as shown in Figure 14, the outlet-side ventilation flue 12 is closed and the heater-side ventilation flue 14 is opened by the first damper 18, the face-side ventilation flue 15 is closed by the second damper 19, the foot-side ventilation flue 16 is opened by the third damper 20, and the defroster-side ventilation flue 17 is opened by the fourth damper 21. As a result, air that flowed out from the evaporator 11 is heated by the heater 13 inside the heater-side ventilation flue 14, some of the air flows to the foot-side ventilation flue 16 from the outlet-side ventilation flue 12 and is blown out into foot space inside the cabin from the foot air outlets 6. Further, the other air flows to the defroster-side ventilation flue 17 from the outlet-side ventilation flue 12 and is blown out towards the windshield from the defroster air outlet 7.

Thus, according to the vehicle air conditioning device of the present embodiment, in a configuration in which the first damper 18 that opens/closes the downstream side of the evaporator 11 is formed so as to span the evaporator 11 in the width direction and rotates around the spindle 18a that extends in the width direction of the evaporator 11, because the first and second outside air ventilation flues 8 and 9 are formed so that outside air flows through one end side and the other end side in the width direction of the evaporator 11, respectively, and the inside air ventilation flue 10 is formed so that inside air flows through the central site in the width direction of the evaporator 11, at any degree of opening of the first damper 18, outside air from the respective outside air ventilation flues 8 and 9 and inside air from the inside air ventilation flue 10 can be caused to flow to the outlet-side ventilation flue 12 side or the heater-side ventilation flue 14 side at a flow rate that corresponds to the degree of opening of the first damper 18, respectively. That is, even in the configuration in which outside air and inside air are caused to flow to the evaporator 11, respectively, it is not necessary to provide the first damper 18 that opens/closes the downstream side of the evaporator 11 for each of the outside air and inside air flow sections, respectively, and thus the number of dampers can be reduced to thereby simplify the structure and lower the manufacturing cost.

In addition, since a configuration is adopted so that outside air in the first and second outside air ventilation flues 8 and 9 flows through one end side and the other end side in the width direction of the evaporator 11, respectively, and inside air in the inside air ventilation flue 10 flows through the central site in the width direction of the evaporator 11, outside air can be caused to flow to both sides in the width direction of the unit body 3 and inside air can be caused to flow to the central site in the width direction of the unit body 3, and thus the outside air and inside air can be caused to flow in a well-balanced manner with respect to the left and right sides inside the unit body 3.

In this case, since a configuration is adopted in which the first and second outside air ventilation flues 8 and 9 of the unit body 3 communicate with the upper ventilation flue 1b of the duct 1a from the blower unit 1, and the inside air ventilation flue 10 of the unit body 3 communicates with the lower ventilation flue 1c of the duct 1a, because the blower unit 1 is normally provided with a single outside air intake port and a single inside air intake port (not shown in the drawings), the upper ventilation flue 1b and the lower ventilation flue 1c can be easily communicated with these intake ports, and thus the structure can be simplified.

Further, since the air inflow sides of the respective outside air ventilation flues 8 and 9 and the inside air ventilation flue 10 are formed so that air flows therein from one side in the width direction of the vehicle towards the other side, and the air outflow sides are formed so that air flows out in the front-and-rear direction of the vehicle towards the evaporator 11, even in a vehicle with a structure in which the blower unit 1 is disposed on one side of the air conditioning unit 2, the blower unit 1 and the air conditioning unit 2 can be easily connected, and an occupying space of the duct 1a that connects the blower unit 1 and the air conditioning unit 2 can be decreased.

In addition, since the respective outside air ventilation flues 8 and 9 and the inside air ventilation flue 10 are arranged so as to be positioned above and below each other, the outside air ventilation flue and inside air ventilation flue of the duct 1a that sends air from the blower unit 1 to the air conditioning unit 2 can also be disposed so as to be positioned above and below each other, and thus a dimension in the front-and-rear direction of the duct 1a can be reduced.

In this case, since the first outside air ventilation flue 8 through which air flows out to one end side in the width direction of the evaporator 11, and the second outside air ventilation flue 9 through which air flows out to the other end side in the width direction of the evaporator 11 are provided so as to adjoin each other in the front-and-rear direction of the vehicle, even when the upper ventilation flue 1b and the lower ventilation flue 1c of the duct 1a are provided at the upper part and lower part of the duct 1a, respectively, the first and second outside air ventilation flues 8 and 9 can be easily communicated with the upper ventilation flue 1b of the duct 1a. There is thus the advantage that even when the two outside air ventilation flues 8 and 9 are provided on a unit body 21 side, the structure of the duct 1a between the two outside air ventilation flues 8 and 9 and the blower unit 1 is not complicated.

In addition, since each of the outside air ventilation flues 8 and 9 and the inside air ventilation flue 10 are formed in a flattened shape so that the respective widths thereof in the front-and-rear direction of the vehicle are less than a dimension in the vertical direction, a depth dimension of the unit body 21 can be decreased and the size of the unit body 21 can be reduced.

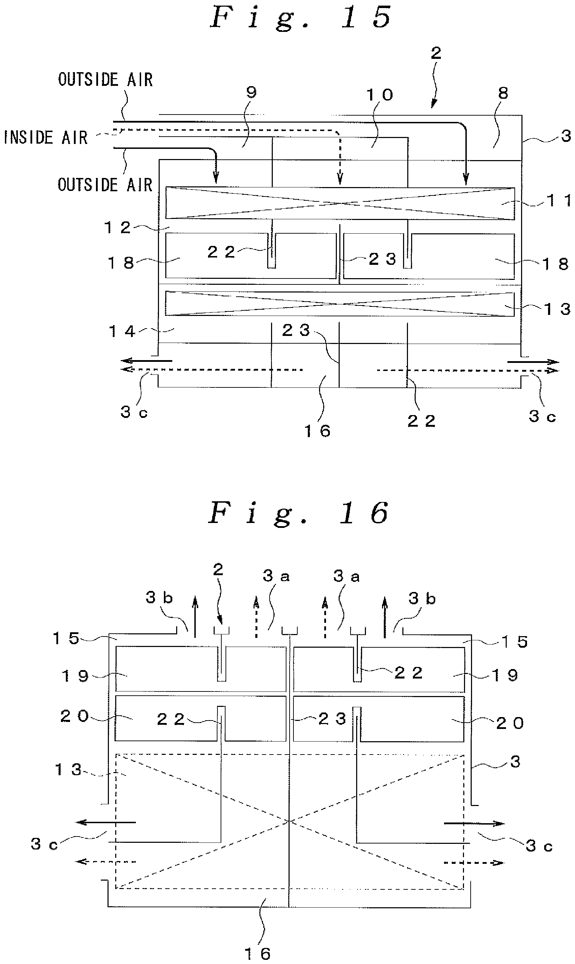

Figure 15 and Figure 16 illustrate another embodiment of the present invention, in which component parts that are equivalent to component parts in the above described embodiment are denoted by the same reference symbols. Note that since the configuration other than the configuration shown in Figure 15 and Figure 16 is identical to the above described embodiment, an illustration thereof is omitted from the drawings.

According to the present embodiment, the inside of the air conditioning unit 2 is partitioned at the center in the width direction by a partition wall 23, and the first, second, and third dampers 18, 19, and 20 are respectively divided for each of a left and a right ventilation flue that are partitioned by the partition wall 23. In this case, the first, second, and third dampers 18, 19, and 20 are respectively capable of operating independently in each of the left and right ventilation flues.

According to the present embodiment, by adjusting the first, second and third dampers 18, 19 and 20 to an arbitrary degree of opening for each of the left and right ventilation flues, for example, air that is blown out to the driver's seat side and air that is blown out to the front passenger seat side can be controlled to different temperatures according to the preferences of the occupants or the heat load, and thus air conditioning inside the cabin can be performed more accurately.

Furthermore, although according to the above described embodiment a configuration was described that includes the heater 13 through which cooling water of the radiator of the vehicle flows, a heater that uses a heat source other than cooling water of a radiator can also be used. For example, a configuration may be adopted that uses an electric heater that is driven by the electric power of a battery, or in which a radiator through which high temperature refrigerant of a refrigerant circuit to which the evaporator 11 is connected flows is used as a heater. Further, a configuration may be adopted in which a circuit is provided through which a heating medium such as water or brine flows, and in which the heated heating medium flows to a heat exchanger as a heater. By using such kinds of heaters, for example, the present invention is advantageous for a vehicle in which there is no engine to serve as a heat source, such as an electric automobile, or a vehicle in which an adequate heat amount for heating can not be secured by means of only the waste heat of the engine, such as a hybrid car.

### Reference Signs List

8 ... first outside air ventilation flue, 9 ... second outside air ventilation flue, 10 ... inside air ventilation flue, 11 ... evaporator, 12 ... outlet-side ventilation flue, 13 ... heater, 14 ... heater-side ventilation flue, 18 ... first damper, 23 ... partition wall

## Claims

1. A vehicle air conditioning device, comprising:
an outside air ventilation flue (8,9) through which outside air that is sucked in from outside a cabin of a vehicle flows; an inside air ventilation flue (10) through which inside air that is sucked in from inside the cabin of the vehicle flows; an evaporator (11) that is disposed on a downstream side of the outside air ventilation flue (8,9) and the outside air ventilation flue (10); an outlet-side ventilation flue (12) through which air that flows out from the evaporator (11) flows; a heater (13) that is disposed on a downstream side of the evaporator (11); a heater-side ventilation flue (14) that causes air that flows out from the evaporator (11) to flow via the heater (13) to the outlet-side ventilation flue (12); and a damper (18) that is formed so as to span the evaporator (11) in a width direction on the downstream side of the evaporator (11), and that, by rotating around a shaft (18a) extending in the width direction of the evaporator (11), opens/closes a flow path of air that flows directly to the outlet-side ventilation flue (12) from the evaporator (11) and a flow path of air that flows from the evaporator (11) via the heater-side ventilation flue (14) to the outlet-side ventilation flue (12), respectively;
wherein:
the outside air ventilation flue (8,9) is formed so that the outside air flows to a predetermined position in the width direction of the evaporator (11);
the inside air ventilation flue (10) is formed so that the inside air flows to another predetermined position in the width direction of the evaporator (11);
and **characterised in that**:
the outside air ventilation flue (8,9) is formed so that outside air flows to one end side and the other end side in the width direction of the evaporator (11); and
the inside air ventilation flue (10) is formed so that inside air flows to a central site in the width direction of the evaporator (11).

2. The vehicle air conditioning device according to claim 1, wherein an air inflow side of the outside air ventilation flue (8,9) and an air inflow side of the inside air ventilation flue (10) is formed so that air flows from one side towards the other side in a width direction of the vehicle, and an air outflow side of the outside air ventilation flue (8,9) and an air outflow side of the inside air ventilation flue (10) is formed so that air flows in a front-and-rear direction of the vehicle towards the evaporator (11).

3. The vehicle air conditioning device according to claim 2, wherein the outside air ventilation flue (8,9) and the inside air ventilation flue (10) are formed so that the air inflow sides thereof are positioned above and below each other.

4. The vehicle air conditioning device according to claim 3, wherein:
the outside air ventilation flue (8,9) is formed from a first outside air ventilation flue (8) through which air flows out to one end side in the width direction of the evaporator (11), and a second outside air ventilation flue (9) through which air flows out to the other end side in the width direction of the evaporator (11); and
the first outside air ventilation flue (8) and the second outside air ventilation flue (9) are provided so that the air inflow sides thereof adjoin each other in the front-and-rear direction of the vehicle.

5. The vehicle air conditioning device according to claim 2, 3, or 4, wherein the outside air ventilation flue (8,9) and the inside air ventilation flue (10) are formed in a flattened shape so that a width of each in the front-and-rear direction of the vehicle is less than a dimension in a vertical direction.

6. The vehicle air conditioning device according to claim 1, 2, 3, 4, or 5, further comprising:
a partition wall (23) that partitions inside of the outlet-side ventilation flue (12) and the heater-side ventilation flue (14) in the width direction of the vehicle;
wherein the damper (18) is configured to be capable of operating independently in each ventilation flue that is partitioned by the partition wall (23).

## Patentansprüche

1. Klimaanlagevorrichtung für ein Fahrzeug, umfassend:
einen Außenluft-Lüftungskanal (8, 9), durch den Außenluft strömt, die von außerhalb eines Fahrgastraums eines Fahrzeugs angesaugt wird; einen Innenluft-Lüftungskanal (10), durch den Innenluft strömt, die von innerhalb des Fahrgastraums des Fahrzeugs angesaugt wird; einen Verdampfer (11), der auf einer dem Außenluft-Lüftungskanal (8, 9) und dem Außenluft-Lüftungskanal (10) nachgelagerten Seite angeordnet ist; einen auslassseitigen Lüftungskanal (12), durch den Luft strömt, die aus dem Verdampfer (11) heraus strömt; eine Heizvorrichtung (13), die auf einer dem Verdampfer (11) nachgelagerten Seite angeordnet ist; einen heizvorrichtungsseitigen Lüftungskanal (14), der Luft, die aus dem Verdampfer (11) herausströmt, über die Heizvorrichtung (13) zum auslassseitigen Lüftungskanal (12) strömen lässt; und einen Dämpfer (18), der so gebildet ist, dass er den Verdampfer (11) auf der dem Verdampfer (11) nachgelagerten Seite in einer Breitenrichtung überspannt, und der, durch Drehen um einen Schaft (18a), der sich in der Breitenrichtung des Verdampfers (11) erstreckt, einen Strömungspfad für Luft öffnet/schließt, die vom Verdampfer (11) aus direkt in den auslassseitigen Lüftungskanal (12) strömt, bzw. einen Strömungspfad für Luft öffnet/schließt, die vom Verdampfer (11) aus über den heizvorrichtungsseitigen Lüftungskanal (14) zum auslassseitigen Lüftungskanal (12) strömt;
wobei:
der Außenluft-Lüftungskanal (8, 9) so gebildet ist, dass die Außenluft zu einer festgelegten Position in der Breitenrichtung des Verdampfers (11) strömt;
der Innenluft-Lüftungskanal (10) so gebildet ist, dass die Innenluft zu einer anderen festgelegten Positions in der Breitenrichtung des Verdampfers (11) strömt;
und **dadurch gekennzeichnet, dass**:
der Außenluft-Lüftungskanal (8, 9) so gebildet ist, dass Außenluft zu einer Endseite und zur anderen Endseite in der Breitenrichtung des Verdampfers (11) strömt; und
der Innenluft-Lüftungskanal (10) so gebildet ist, dass Innenluft zu einer mittigen Stelle in der Breitenrichtung des Verdampfers (11) strömt.

2. Klimaanlagevorrichtung für ein Fahrzeug gemäß Anspruch 1, wobei eine Lufteinströmseite des Außenluft-Lüftungskanals (8, 9) und eine Lufteinströmseite des Innenluft-Lüftungskanals (10) so gebildet sind, dass Luft in einer Breitenrichtung des Fahrzeugs von einer Seite zur anderen Seite strömt, und eine Luftausströmseite des Außenluft-Lüftungskanals (8, 9) und eine Luftausströmseite des Innenluft-Lüftungskanals (10) so gebildet ist, dass Luft in einer Front-Heck-Richtung des Fahrzeugs auf den Verdampfer (11) zu strömt.

3. Klimaanlagevorrichtung für ein Fahrzeug gemäß Anspruch 2, wobei der Außenluft-Lüftungskanal (8, 9) und der Innenluft-Lüftungskanal (10) so gebildet sind, dass die Lufteinströmseiten davon über- und untereinander angeordnet sind.

4. Klimaanlagevorrichtung für ein Fahrzeug gemäß Anspruch 3, wobei:
der Außenluft-Lüftungskanal (8, 9) aus einem ersten Außenluft-Lüftungskanal (8), durch den Luft heraus zu einer Endseite in der Breitenrichtung des Verdampfers (11) strömt, und einem zweiten Außenluft-Lüftungskanal (9), durch den Luft heraus zur anderen Endseite in der Breitenrichtung des Verdampfers (11) strömt, gebildet wird; und
der erste Außenluft-Lüftungskanal (8) und der zweite Außenluft-Lüftungskanal (9) so vorgesehen sind, dass die Lufteinströmseiten davon in der Front-Heck-Richtung des Fahrzeugs aneinander angrenzen.

5. Klimaanlagevorrichtung für ein Fahrzeug gemäß Anspruch 2, 3 oder 4, wobei der Außenluft-Lüftungskanal (8, 9) und der Innenluft-Lüftungskanal (10) in einer abgeflachten Form gebildet werden, sodass eine Breite eines jeden in der Front-Heck-Richtung des Fahrzeugs kleiner ist als eine Abmessung in einer vertikalen Richtung.

6. Klimaanlagevorrichtung für ein Fahrzeug gemäß Anspruch 1, 2, 3, 4 oder 5, ferner umfassend:
eine Trennwand (23), die innerhalb des auslassseitigen Lüftungskanals (12) und des heizungsvorrichtungsseitigen Lüftungskanals (14) in der Breitenrichtung des Fahrzeugs unterteilt;
wobei der Dämpfer (18) so konfiguriert ist, dass er unabhängig in jedem Lüftungskanal funktioniert, der von der Trennwand (23) unterteilt wird.

## Revendications

1. Dispositif de climatisation de véhicule, comprenant :
un conduit de ventilation d'air extérieur (8, 9) par lequel s'écoule de l'air extérieur, aspiré de l'extérieur de l'habitacle d'un véhicule ; un conduit de ventilation d'air intérieur (10) par lequel s'écoule de l'air intérieur aspiré de l'intérieur de l'habitacle du véhicule ; un évaporateur (11) agencé en aval du conduit de ventilation d'air extérieur (8, 9) et du conduit de ventilation d'air intérieur (10) ; un conduit de ventilation côté sortie (12) par lequel s'écoule l'air provenant de l'évaporateur (11) ; un appareil de chauffage (13) disposé en aval de l'évaporateur (11) ; un conduit de ventilation côté appareil de chauffage (14) causant l'écoulement de l'air provenant de l'évaporateur (11) dans le conduit de ventilation côté sortie (12) via l'appareil de chauffage (13) ; et un registre (18) constitué de façon à enjamber l'évaporateur (11) dans le sens de la largeur en aval de l'évaporateur (11), et qui, en tournant autour d'un arbre (18a) s'étendant dans le sens de la largeur de l'évaporateur (11), ouvre/ferme un chemin d'écoulement d'air s'écoulant directement dans le conduit de ventilation côté sortie (12) depuis l'évaporateur (11), et un chemin d'écoulement pour l'air s'écoulant de l'évaporateur (11) au conduit de ventilation côté sortie (12) en passant par le conduit de ventilation côté appareil de chauffage (14), respectivement ;
dans lequel :
le conduit de ventilation d'air extérieur (8, 9) est constitué de sorte que l'air extérieur s'écoule dans une position prédéterminée dans le sens de la largeur de l'évaporateur (11) ;
le conduit de ventilation d'air intérieur (10) est constitué de sorte que l'air intérieur s'écoule dans une autre position prédéterminée dans le sens de la largeur de l'évaporateur (11) ;
et **caractérisé en ce que** :
le conduit de ventilation d'air extérieur (8, 9) est constitué de sorte que l'air extérieur s'écoule vers un côté d'extrémité et vers l'autre côté d'extrémité dans le sens de la largeur de l'évaporateur (11) ; et
le conduit de ventilation d'air intérieur (10) étant constitué de sorte que l'air intérieur s'écoule vers un point central dans le sens de la largeur de l'évaporateur (11).

2. Dispositif de climatisation de véhicule selon la revendication 1, un côté d'admission d'air du conduit de ventilation d'air extérieur (8, 9) et un côté d'admission d'air du conduit de ventilation d'air intérieur (10) sont constitués de sorte que l'air s'écoule d'un côté vers l'autre côté dans le sens de la largeur du véhicule, et un côté de refoulement d'air du conduit de ventilation d'air extérieur (8, 9) et un côté de refoulement d'air du conduit de ventilation d'air intérieur (10) sont constitués de sorte que l'air s'écoule dans le sens avant-arrière du véhicule, en direction de l'évaporateur (11).

3. Dispositif de climatisation de véhicule selon la revendication 2, le conduit de ventilation d'air extérieur (8, 9) et le conduit de ventilation d'air intérieur (10) étant constitués de sorte que leurs côtés d'admission d'air sont positionnés l'un au-dessus et au-dessous de l'autre.

4. Dispositif de climatisation de véhicule selon la revendication 3, dans lequel :
le conduit de ventilation d'air extérieur (8, 9) est constitué avec un premier conduit de ventilation d'air extérieur (8) par lequel de l'air s'écoule vers un côté d'extrémité dans le sens de la largeur de l'évaporateur (11), et un deuxième conduit de ventilation d'air extérieur (9) par lequel de l'air s'écoule vers l'autre côté d'extrémité dans le sens de la largeur de l'évaporateur (11) ; et
le premier conduit de ventilation d'air extérieur (8) et le deuxième conduit de ventilation d'air extérieur (9) par étant agencés de sorte que leurs côtés d'admission d'air se jouxtent dans le sens avant-arrière du véhicule.

5. Dispositif de climatisation de véhicule selon la revendication 2, 3 ou 4, le conduit de ventilation d'air extérieur (8, 9) et le conduit de ventilation d'air intérieur (10) étant façonnés avec une forme aplatie de sorte qu'une largeur de chacun dans le sens avant-arrière du véhicule est inférieure à une dimension dans une direction verticale.

6. Dispositif de climatisation de véhicule selon la revendication 1, 2, 3, 4 ou 5, comprenant en outre :
une cloison (23) cloisonnant l'intérieur du conduit de ventilation côté sortie (12) et du conduit de ventilation côté appareil de chauffage (14) dans le sens de la largeur du véhicule ;
le registre (18) étant configuré de façon à pouvoir fonctionner indépendamment dans chaque conduit de ventilation cloisonné par la cloison (23).
